(19) Europäisches Patentamt
European Patent Office
Office européen des brevets

(11) **EP 4 333 279 A1**

(12) **EUROPEAN PATENT APPLICATION**

(43) Date of publication:
**06.03.2024 Bulletin 2024/10**

(21) Application number: **22193234.6**

(22) Date of filing: **31.08.2022**

(51) International Patent Classification (IPC):
**H02M 1/00** $^{(2006.01)}$ **H02M 7/5387** $^{(2007.01)}$
**H02M 3/00** $^{(2006.01)}$ **H02M 3/335** $^{(2006.01)}$

(52) Cooperative Patent Classification (CPC):
**H02M 1/0058; H02M 1/007; H02M 3/01;
H02M 3/33573; H02M 3/33576; H02M 7/5387**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventor: **KADAM, Abhijit
421503 Thane (IN)**

(74) Representative: **Patentanwaltskanzlei WILHELM
& BECK
Prinzenstraße 13
80639 München (DE)**

(54) **SOFT SWITCHING POWER CONVERTER**

(57)    A power converter (102), a control unit (104), a charging device (200) and a method (400) for transferring power to an EV (106) from a power grid are provided. The power converter (102) includes an isolated DC-DC converter (102C) having a first stage (201) converting a DC voltage (Vin) into a high frequency AC voltage (V1ac) having an amplitude V1, an intermediary stage (203) having a high frequency transformer (203A), a resonant tank (204) which outputs a resonant sinusoidal current scaled by the high frequency transformer (203A), and a second stage (202), connected to a secondary winding of the high frequency transformer (203A), including a power conversion switch (S5), four diodes (D1-D4), and two or more capacitors (C1, C2), that selectively converts the high frequency AC voltage (V2ac) of amplitude V2 into a DC voltage (Vo) of amplitude V2 or 2V2.

FIG 2B

**Description**

The present disclosure relates to a power converter. More particularly, the present disclosure relates to a soft switching resonant power converter employable in DC fast charging of Electric Vehicles (EVs).

EVs are being adopted worldwide as an alternative to the traditional internal combustion-based vehicles. Therefore, there arises a growing demand for the development of charging infrastructure for fast charging of these EVs. One of the methods for fast charging is a DC fast charger.

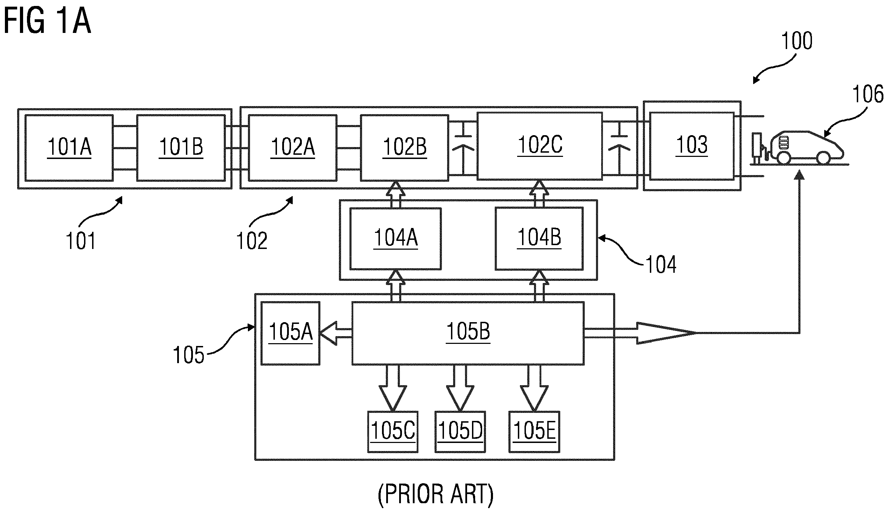

FIG 1A illustrates a block diagram of a DC charger 100 employed in charging of EVs 106, according to state of the art. The DC charger 100 includes a low voltage input module 101, a power electronics module 102 also referred to as a power converter 102, and an output module 103 electrically coupled to one another as shown in FIG 1A. The low voltage input module has a 3-phase AC voltage supply Vac coming from the power grid 101A and an input side protection unit 101B. The power converter 102 has an input filter 102A, a 3-phase AC to DC converter 102B such as a 3-phase pulse width modulation (PWM) converter and an isolated DC-DC converter 102C, electrically coupled with one another. The output module 103 is an output protection unit that provides DC voltage at its output which is used by an EV 106 for DC fast charging. The DC charger 100 also includes a controller module 104, also referred to as the control unit 104, having one or more controllers 104A, 104B. The controller module 104 is electrically coupled with the power converter 102 for controlling the 3-phase pulse width modulation (PWM) converter 102B and the isolated DC-DC converter 102C.

The DC charger 100 also includes a software module 105 having a user interface 105A such as a human machine interface (HMI) electrically coupled with a communication controller module 105B which in turn communicates with portable electronic devices 105C such as cell phones, a cloud communication network 105D and/or the power grid 105E. The communication controller module 105B also communicates with the EV 106.

The DC output voltage being provided to the EV 106 should conform to the battery voltage rating of the EV 106 being charged. Usually, the battery capacity and voltage requirement of an EV 106 varies depending upon the EV range, that is, the distance which the EV 106 can cover in one full battery charge. For example, low range vehicles have a battery voltage of about 150V, whereas high range or heavy vehicles like E-trucks and E-Buses have a battery voltage of about 1500V. Therefore, for charging various types of EVs 106, the DC output voltage of the DC charger 100 should have a wide range from about 150V to about 1500V while ensuring delivery of high power over the whole range.

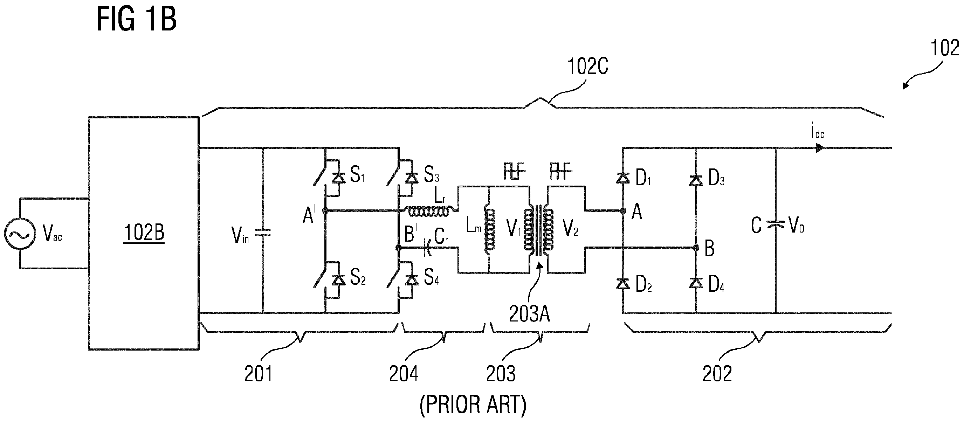

FIG 1B illustrates an electrical circuit diagram of the power converter 102 of the DC charger 100 shown in FIG 1A, according to state of the art. The power converter 102 receives a 3-phase AC input Vac from the input module 101 which is then provided to its 3-phase AC to DC conversion module 102B which provides a DC output voltage Vin which in turn is provided as an input to the isolated DC-DC converter 102C.

Depending upon the power requirements, the isolated DC-DC converter 102C can either be a bi-directional converter or a unidirectional converter. As per recent trends for high power applications, for example, above 250kW, unidirectional DC-DC converters are preferred. This is primarily due to their low cost as compared to bi-directional converters. Also, a power converter with high power density is preferred. One of the ways to achieve very high power density is by operating the converters at high switching frequencies usually above 100kHz. This reduces the size of magnetics and filtering components. However, for hard switched converters, switching losses are considerable when operated at such high switching frequencies. This impacts the overall converter efficiency. Therefore, the soft switching converters are suitable for such applications as they inherently have negligible switching loss. One such soft switching power converter with all the desirable features such as high efficiency, low EMI and high-power density is an LLC resonant converter 102C as shown in FIG 1B.

However, for applications in EV charging, designing the LLC resonant converter 102C has several challenges and therefore, it is not the optimal solution from the point of view of cost, efficiency, and power density. To understand these challenges and the associated problems, it is important to understand the basic physics behind the working of LLC resonant converter 102C.

The LLC resonant converter 102C typically comprises two power conversion stages namely a first stage 201 performing DC to high frequency AC conversion via a primary full bridge rectifier and a second stage 202 performing high frequency AC to DC conversion via a secondary diode bridge rectifier. At the first stage 201, the DC voltage Vin is converted to a high frequency AC voltage of amplitude V1. At the second stage 202, a high frequency AC voltage of amplitude V2 is converted to the output DC voltage Vo. These two stages 201 and 202 are coupled by an intermediary stage 203 providing high frequency isolation therebetween and a resonant tank 204.

The intermediary stage 203 includes a high frequency transformer connected between the first stage 201 and the second stage 202 having a turns ratio of V1:V2.

The resonant tank 204 comprises a resonant inductor Lr, a resonant capacitor Cr and a transformer magnetizing inductor Lm connected to each other to form an LLC resonant tank as shown in FIG 1B. The first stage 201 generates a square waveform to excite the LLC resonant tank 204, which will generate as an output, a resonant sinusoidal current that gets scaled by the transformer of the intermediary stage 203 and rectified by the rectifier diode bridge circuit of the second stage 202. An output capacitor C of the second stage 202 filters the rectified ac current and outputs a DC voltage Vo. Thus, the working principle of the LLC converter 102C is like an LC series resonant circuit wherein, due to zero impedance offered by an LC tank, peak gain of the LC tank is achieved at resonant frequency fr. However, due to the presence of Lm, the LLC resonant tank's switching frequency fs at peak resonance is now a function of load and lies somewhere in between frequencies fr and fp represented as below:

$$f_r = \frac{1}{2\pi\sqrt{L_r C_r}}; \; f_p = \frac{1}{2\pi\sqrt{(L_r + L_m)C_r}}$$

However, to achieve zero cross over switching of the diode bridge rectifier in the second stage 202, the LLC resonant converter 102C should be operated below resonance, that is, switching frequency fs must be lower than fr.

The output voltage Vo is regulated by changing the switching frequency fs of the primary full bridge rectifier of the first stage 201 and thereafter changing the frequency of the square wave excitation to the LLC resonant tank 204. Converter gain of the LLC resonant converter 102C is a product of gain of the LLC resonant tank 204 and transformers turns ratio. The transformer turns ratio is a constant and cannot be changed physically. Thus, there is only one control variable which can be adjusted to obtain the required converter gain which is the resonant tank gain.

The output voltage Vo is therefore regulated via changing the gain of the LLC resonant tank 204. This gain is frequency dependent and can be represented as below:

$$K(Q, m, F_x) = \left|\frac{V_{o\_ac}(s)}{V_{in\_ac}(s)}\right| = \frac{F_x^2(m-1)}{\sqrt{\left(m \cdot F_x^2 - 1\right)^2 + Fx^2 \cdot \left(F_x^2 - 1\right)^2 \cdot (m-1)^2 \cdot Q^2}}$$

Wherein K is the gain of the LLC resonant tank 204 which is a function of a quality factor Q, a ratio m of total primary inductance to resonant inductance, and a normalized switching frequency Fx, each of whcih can be represented as below:

$$Q = [\sqrt{\frac{Lr}{Cr}}]/R_{ac}$$

and wherein $R_{ac}$ is reflected laod resistance represented as below:

$$R_{ac} = [\left(\frac{8}{\pi^2}\right)\left(\frac{Np^2}{Ns^2}\right)R_o$$

and

$$F_x = \frac{f_s}{f_r}$$

Wherein fr is the resonant frequency represent as below:

$$f_r = 1/(2\pi\sqrt{L_r * C_r})$$

and

$$m = (L_r + L_m)/L_r$$

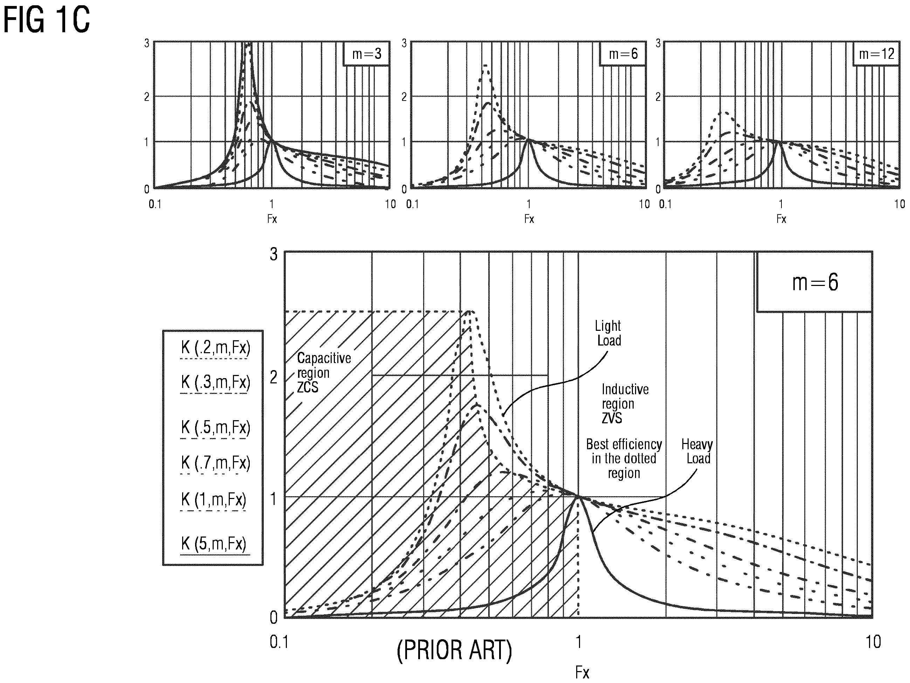

From the above equations and from FIG 1C illustrating various curves representing the parameters affecting the LLC resonant tank gain K, according to state of the art, a person skilled in the art, would appreciate that a higher gain K can be obtained at lighter load or at lower Q values; with the increasing value of m, the peak gain K that can be achieved goes on reducing; and when the LLC resonant tank 204 is operated below resonance, that is, when fs < fr, a boost mode, that is, K > 1, is obtained, and when operated above resonance with fs > fr, a buck mode with K < 1 is obtained. Moreover, to achieve zero voltage switching (ZVS) for the first stage 201, the LLC resonant converter 102C has to operate in the inductive region; and to achieve zero current switching (ZCS) of the second stage 202, the LLC resonant converter 102C has to operate with fs < fr, that is, in the boost mode. Furthermore, highest efficiency is achieved at resonance or very close to resonant frequency as the efficiency droops as we move farther away from the resonant frequency.

Therefore, in order to achieve both ZCS and ZVS, the LLC resonant converter 102C has to operate below resonance in boost mode and in the inductive region. Due to these restrictions, operation of the LLC resonant converter 102C is limited to the dotted region as shown in FIG. 1C, and the best efficiency for the LLC resonant converter 102C is achieved when operated in this narrow region. This leads to huge oversizing of several components when designing the LLC resonant converter 102C especially for a wide range of operation servicing the output voltage range of 150V to 1500V.

The aforementioned technical problem can be further elaborated using a design example, assuming a 25kW LLC resonant converter 102C is being designed for an input voltage Vin = 700V and a wide DC output voltage Vo ranging from about 250V to about 1000V. Thus, the design constranits are as below:

Desired power P = 25kW
Vin =700V
Vo_min = 250V
Vo_max =1000V

For achieving ZCS the LLC resonant converter 102C must operate in boost mode. In boost mode, the minimum resonant tank gain of K = 1 can be achieved at fs = fr.

Now Converter gain = Kmin * transformer turns ratio (Ns/Np)

Therefore, for K=1, Converter gain = transformer turns ratio,

that is, Vo_min/Vin = transformer turns ratio

Therefore, transformer turns ratio = (Ns/Np) = 250/700.

Thus, for an output voltage of 250V, the transformer primary voltage is 700V.

Now, for an output voltage of 1000V, the required gain is provided by resonant tank in the boost mode.

Therefore, Vomax/Vin = Kmax*(Ns/Np).

1000/700 = Kmax *(250/700)
Kmax = 1000/250 = 4.

Hence, we need a max boost gain of Kmax=4 in order to achieve max output voltage of 1000V.

Moreover, for an output of Vo_max =1000V, the transformer secondary voltage will be 1000V and therefore, primary voltage would be 700*4 =2800V. This would increase the size and cost of the transformer in the intermediary stage 203 tremendously.

Furthermore, to achieve higher gain we have to operate farther away from resonance. Therefore, there is a drop in efficiency for the higher values of gain. This is due to the larger circulating magnetization current as we are now closer to fp and away from fr.

Furthermore, the resonant capacitor Cr has to be rated for a peak voltage of about 6000V and the resonant inductor Lr for a peak voltage rating of about 4000C, thus, calling for huge sizes of both Lr and Cr.

Thus, it is evident that a practical design of an LLC resonant converter 102C over such a wide operating range of DC output voltqage with a high gain has several aforementioned problems making it non-feasible for practical implementations as such a conventional LLC resonant converter 102C can either provide a low cost and high power density or a wide output range but not both.

Accordingly, it is an object of the present disclosure to provide a soft switching power converter that provides a wide range of DC output voltages having high power density without compromising on cost and without increasing number of components or size of components.

Moreover, it is another object of the present disclosure to provide a charging device, a control unit, and a method employing aforementioned soft switching power converter for transferring power to an electric vehicle from a power grid.

The power converter disclosed herein achieves the aforementioned object in that an isolated DC-DC converter of the power converter includes a second stage that is capable of selectively converting a high frequency AC voltage V2ac having an amplitude V2 into a DC voltage Vo of an amplitude V2 or 2V2, thereby selectively doubling an overall gain of the power converter.

According to one aspect of the present disclosure, the power converter disclosed herein comprises an AC-DC converter, for example, a 3 phase AC to DC converter generating a DC voltage Vin from an AC voltage Vacgrid received from an AC power grid. According to this aspect of the present disclosure, the power converter comprises an input filter filtering the AC voltage Vacgrid.

According to another aspect of the present disclosure, the power converter receives a DC voltage Vdcgrid from a DC power grid as the DC voltage Vin. The power converter comprises an isolated DC-DC converter. According to this aspect of the present disclosure, the DC voltage Vdcgrid is fed to the isolated DC-DC converter without requirement of an AC-DC conversion.

The isolated DC-DC converter comprises a first stage, a resonant tank, a second stage, and an intermediary stage electrically coupling the first stage and the resonant tank to the second stage. The first stage converts the DC voltage Vin into a high frequency AC voltage V1ac, that is, at the first stage, a DC voltage Vin is converted to high frequency AC voltage of amplitude V1.

According to one aspect, the first stage comprises a capacitor connected across the output of the 3-phase AC-DC converter, across which the DC voltage V1 appears. The first stage also comprises four switches. Advantageously, the first stage comprises four power conversion switches S1-S4 electrically coupled to a primary winding A"-B" of a high frequency transformer of the intermediary stage via the resonant tank such that a second terminal of a first power conversion switch S1 is connected to a first terminal of a second power conversion switch S2 and a first end A' of a resonant inductor Lr of the resonant tank. A first terminal of the first power conversion switch S1 is connected to a first terminal of a third power conversion switch S3. A second terminal of the second power conversion switch S2 is connected to a second terminal of a fourth power conversion switch S4. A second terminal of the third power conversion switch S3 is connected to a first terminal of the fourth power conversion switch S4 and a first end B' of a resonant capacitor Cr of the resonant tank.

The resonant tank is operably connected to the first stage and a primary winding A"-B" of the high frequency transformer of the intermediary stage, wherein the resonant tank when excited by a square waveform generated by the first stage outputs a resonant sinusoidal current that is scaled by the high frequency transformer.

The resonant tank comprises a resonant inductor Lr, a resonant capacitor Cr, and a transformer magnetizing inductor Lm operably connected to one another such that a second end of the resonant inductor Lr is connected to a first end of the transformer magnetizing inductor Lm, wherein a first end A' of the resonant inductor Lr is connected to a second terminal of a first power conversion switch S1 and a first terminal of a second power conversion switch S2 of the first stage, a second end of the resonant capacitor Cr is connected to a second end of the transformer magnetizing inductor Lm, wherein a first end B' of the resonant capacitor Cr is connected to a second terminal of a third power conversion switch S3 and a first terminal of a fourth power conversion switch S4 of the first stage, and the first end of the transformer magnetizing inductor Lm is connected to a first end A" of the primary winding A"-B" of the high frequency transformer of the intermediary stage and a second end of the transformer magnetizing inductor Lm is connected to a second end B" of the primary winding A"-B" of the high frequency transformer.

The intermediary stage comprises a high frequency transformer having a turns ratio equal to a ratio of the high frequency AC voltage V1ac and the high frequency AC voltage V2ac, that is, V1:V2. Advantageously, V1 depends on the power grid supply voltage connection and V2 depends on a maximum voltage capacity of a vehicle battery. For example, V1 can range from about 300 to about 800V and V2 can range from about 400V to about 1500V.

According to one aspect, the high frequency transformer is a two-winding transformer, for example having a single primary winding and a single secondary winding. According to this aspect, the high frequency AC voltage V1ac is applied to the primary winding and the high frequency AC voltage V2ac is applied to the secondary winding. According to another aspect, the high frequency transformer is a multi-winding transformer, for example having multiple windings at the primary side and multiple windings at the secondary side.

According to this aspect, the high frequency AC voltage V1ac is applied to one of the windings at the primary side and the high frequency AC voltage V2ac is applied to a set of multiple windings on the secondary side. According to this aspect, multiple second stages, that is, one per winding at the secondary side, are connected in parallel.

The second stage converts a high frequency AC voltage V2ac having an amplitude V2 into the DC voltage Vo. Advantageously, the DC voltage Vo is equal to V2 or 2V2, thereby, providing for a wider range of DC voltage.

The second stage comprises a power conversion switch S5 having a diode D5 connected in parallel across the power conversion switch S5. Each power conversion switch used in the first stage as well as the second stage is a two-quadrant switch. As used herein, the term "switch" refers to a switching device capable of connecting and disconnecting two electrical nodes realized, for example, using an Insulated-Gate Bipolar Transistor (IGBT), a Metal-Oxide-Semiconductor Field-Effect Transistor (MOSFET), thyristors, diodes, variable resistances or using any other devices of this class apparent to a person skilled in the art. The switch may also be a mechanical switch such as a contactor. Each of the power conversion switches of the first stage and/or the second stage may be realized using a series or a parallel connection of one or more individual switches with help of a common gating logic pulse that would meet the voltage and current requirements of the power converter.

Advantageously, each of the power conversion switches S1-S5 of the first stage and the second stage, when in an off state, blocks a positive DC voltage Vo applied across the first terminal and the second terminal of each of the power conversion switches S1-S5.

The second stage also comprises two or more capacitors, for example, C1 and C2, electrically coupled with the power conversion switch such that each of the capacitors is equally charged during operation of the power converter.

The second stage also comprises four diodes D1-D4 electrically coupled to the power conversion switch S5 and the capacitors C1, C2, so as to form a variable gain rectifier at the second stage. Advantageously, the variable gain rectifier selectively generates a gain of 1 or 2 based on the position of the power conversion switch S5. For example, the power conversion switch S5 when in a closed state enables the second stage to generate the DC voltage Vo having the amplitude 2V2 corresponding to the high frequency AC voltage V2ac of the amplitude V2 and the power conversion switch S5 when in an open state enables the second stage to generate the DC voltage Vo having the amplitude V2 corresponding to the high frequency AC voltage V2ac having the amplitude V2.

For example, when the power conversion switch S5 is closed, that is, in an ON state, the DC voltage Vo equals 2V2 thus generating a gain of 2. Similarly, when the power conversion switch S5 is open, that is, in an OFF state, the DC voltage Vo equals V2 thus generating a gain of 1.

According to one aspect, in the second stage, the power conversion switch S5, the four diodes D1-D4, and the capacitors C1 and/or C2 are arranged across a secondary winding A-B of the high frequency transformer such that a first terminal of a first diode D1 is connected to a second terminal of a second diode D2 and a first end A of the secondary winding. A first terminal of the second diode D2 is connected to a first terminal of a fourth diode D4 and a negative terminal of a second capacitor C2. A second terminal of the fourth diode D4 is connected to a second terminal of the power conversion switch S5 and a second end B of the secondary winding. A first terminal of the power conversion switch S5 is connected to a first terminal of a third diode D3, a positive terminal of the second capacitor C2 and a negative terminal of a first capacitor C1, and a second terminal of the first diode D1 is connected to a second terminal of the third diode D3 and to a positive terminal of the first capacitor C1.

According to another aspect, in the second stage, the power conversion switch S5, the four diodes D1-D4, and the capacitors C1 and/or C2 are arranged across a secondary winding A-B of the high frequency transformer such that a first terminal of a first diode D1 is connected to a second terminal of a second diode D2 and a first end A of the secondary winding A-B, a first terminal of the second diode D2 is connected to a first terminal of a fourth diode D4 and a negative terminal of a second capacitor C2, a second terminal of the fourth diode D4 is connected to a second terminal of the power conversion switch S5, a positive terminal of the second capacitor C2 and a negative terminal of a first capacitor C1, a first terminal of the power conversion switch S5 is connected to a first terminal of a third diode D3 and a second end B of the secondary winding A-B, and a second terminal of the first diode D1 is connected to a second terminal of the third diode D3 and to a positive terminal of the first capacitor C1.

It would be understood to a person skilled in the art that multiple such power converters may be connected together and employed as a multiphase converter with multiphase input and/or output connections. Moreover, each single phase converter can have multiple input connections connected together in parallel.

Also, disclosed herein is a control unit controlling the aforementioned power converter and more specifically the isolated DC-DC converter of the power converter. The control unit comprises controller(s) that selectively switch the power conversion switch S5 of the second stage of the isolated DC-DC converter of the power converter, between a closed state, that is an ON state, and an open state, that is an OFF state, based on a voltage requirement of a battery of an electric vehicle when connected to a vehicle-side module connectable to the power converter.

Also, disclosed herein is a charging device for transferring power to an electric vehicle (EV) from a power grid. The charging device comprises the aforementioned control unit, the aforementioned power converter being controlled by the control unit, a grid-side module, and a vehicle-side module.

The grid-side module is capable of receiving an AC voltage Vacgrid or a DC voltage Vdcgrid from the power grid, for example, an AC power grid or a DC power grid and/or an energy storage system respectively.

The vehicle-side module is capable of delivering a DC voltage Vo to the EV connected to the charging device, for charging the EV.

The charging device disclosed herein, is advantageously a DC fast charger capable of charging a wide range of EVs including, for example, light motor vehicles such as cars and heavy duty EVs such as trucks, buses, etc.

Also, disclosed herein is a method for transferring power to an electric vehicle (EV) from a power grid using the aforementioned charging device. The method detects physical connection of the EV to the vehicle-side module of the charging device. The method selectively operates, based on a voltage requirement of a battery of the EV, the power conversion switch S5 of the second stage of the isolated DC-DC converter of the power converter of the charging device in one of a closed state and an open state. The power conversion switch S5 when in the closed state enables the second stage to generate the DC voltage Vo having an amplitude 2V2 corresponding to a high frequency AC voltage V2ac of the amplitude V2, and when in an open state enables the second stage to generate the DC voltage Vo having an amplitude V2 corresponding to the high frequency AC voltage V2ac having the amplitude V2.

The method switches the power conversion switch S5, for example, by employing a control unit of the charging device, between the states closed and open, depending upon the type of the EV to which the DC voltage Vo is to be applied and voltage requirements of the battery of this EV.

The method employs the charging device to detect the voltage requirement of the EV using the control unit which in turn is electrically coupled with the power converter. Alternatively, the method detects the voltage requirement of the EV by the software module, which in turn is electrically coupled with the control unit. The software module, for example, via its user interface receives the voltage requirement as a user input. Alternatively, the method employs one or more image capturing devices in communication with the software module to record one or more images of the EV which are in turn processed by the software module to determine a make and a type of the EV based on which the voltage requirement is determined.

The method switches the power conversion switch S5 ON by closing it, when the EV is a heavy-duty vehicle such as a bus or a truck, to generate Vo=2V2.

The method switches the power conversion switch S5 OFF by opening it, when the EV is not a heavy-duty vehicle such as a light motor vehicle, etc., to generate Vo=V2.

The method further includes providing the DC voltage Vo to the EV via the vehicle-side module of the charging device for charging the EV.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1A      illustrates a block diagram of a DC charger employed in charging of Electric Vehicles (EVs), according to state of the art;

FIG 1B      illustrates an electrical circuit diagram of the power converter of the DC charger shown in FIG 1A, according to state of the art;

FIG 1C      illustrates various curves representing parameters affecting gain ,K' of an LLC resonant tank of an isolated DC-DC converter of the power converter shown in FIG 1B, according to state of the art;

FIG 2A      illustrates a block diagram of a charging device employed in charging of Electric Vehicles (EVs), according to an embodiment of the present disclosure;

FIG 2B      illustrates a block diagram of a power converter of the charging device shown in FIG 2A, according to an embodiment of the present disclosure;

FIG 2C      illustrates an electrical circuit diagram of a first stage of the isolated DC-DC converter shown in FIG 2B, according to an embodiment of the present disclosure;

FIG 2D      illustrates an electrical circuit diagram of a resonant tank of the isolated DC-DC converter shown in FIG 2B, according to an embodiment of the present disclosure;

FIG 2E      illustrates an electrical circuit diagram of an intermediary stage of the isolated DC-DC converter shown in FIG 2B, according to an embodiment of the present disclosure;

FIGS 2F-2G      illustrate an electrical circuit diagram of a second stage of the isolated DC-DC converter shown in FIG 2B, according to various embodiments of the present disclosure;

FIGS 3A-3B      illustrate current flows through the electrical circuit diagram of the second stage of the isolated DC-DC converter, shown in FIG 2F, when a power conversion switch of the second stage is closed, according to an embodiment of the present disclosure;

FIGS 3C-3D      illustrate current flows through the electrical circuit diagram of the second stage of the isolated DC-DC converter, shown in FIG 2F, when a power conversion switch of the second stage is open, according to an embodiment of the present disclosure;

FIG 4          illustrates a process flow chart of a method for transferring power to an electric vehicle from a power grid employing the charging device shown in FIG 2A, according to an embodiment of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

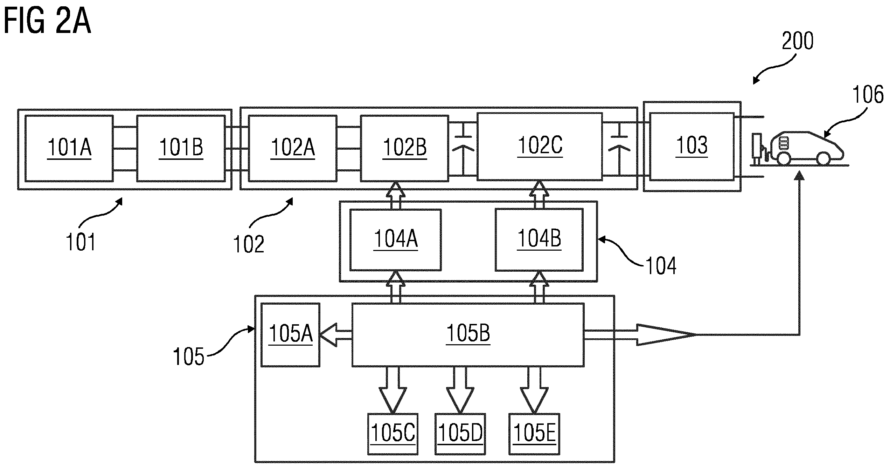

FIG 2A illustrates a block diagram of a charging device 200 employed in charging of Electric Vehicles (EVs) 106, according to an embodiment of the present disclosure. The charging device 200 includes a grid-side module 101, a power converter 102, and a vehicle-side module 103 electrically coupled to one another as shown in FIG 2A. The grid-side module 101 has a 3-phase AC voltage supply Vacgrid represented by 101A coming from the power grid and a protection unit 101B electrically coupled to the 3-phase AC voltage supply 101A. The grid-side module 101 acts as an interface between the power converter 102 and the power grid for receiving AC voltage Vacgrid from the power grid.

The power converter 102 has an input filter 102A, a 3-phase AC to DC converter 102B such as a 3-phase pulse width modulation (PWM) converter and an isolated DC-DC converter 102C, electrically coupled with one another. The vehicle-side module 103 is a protection unit that is capable of delivering a DC voltage Vo to an EV 106. The charging device 200 also includes a control unit 104 having one or more controllers 104A, 104B.

The control unit 104 is electrically coupled with the power converter 102 for controlling the 3-phase pule width modulation (PWM) converter 102B and the isolated DC-DC converter 102C.

The charging device 102 also includes a software module 105 having a user interface 105A such as a human machine interface (HMI) electrically coupled with a communication controller module 105B which in turn communicates with portable electronic devices 105C such as cell phones, a cloud communication network 105D and/or the power grid 105E. The communication controller module 105B also communicates with the EV 106.

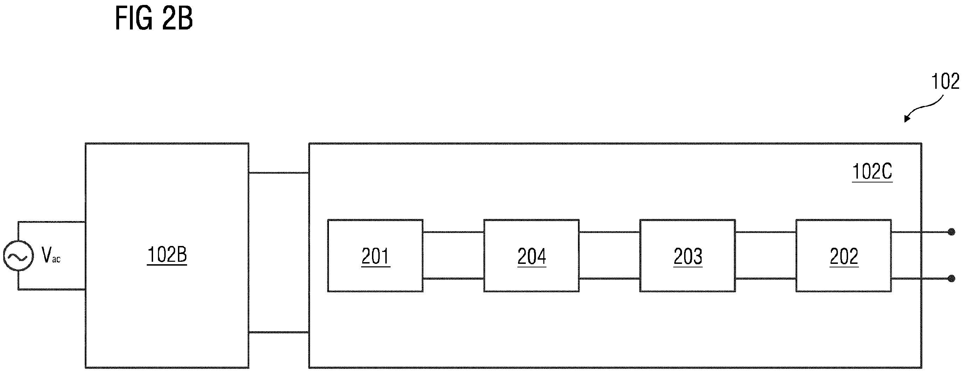

FIG 2B illustrates a block diagram of a power converter 102 of the charging device 200 shown in FIG 2A, according to an embodiment of the present disclosure. The power converter 102 receives a 3-phase AC input Vacgrid from the grid-side module 101 which is then provided to a 3-phase AC to DC converter 102B of the power converter 102, that generates a DC voltage Vin which in turn is provided as an input to the isolated DC-DC converter 102C.

The isolated DC-DC converter 102C comprises a first stage 201 capable of converting the DC voltage Vin into a high frequency AC voltage V1ac of amplitude V1. The isolated DC-DC converter 102C comprises a second stage 202. The second stage 202 is capable of converting a high frequency AC voltage V2ac of amplitude V2 into DC voltage Vo of amplitude V2 or 2V2 selectively. These two stages, that is, the first stage 201 and the second stage 202 are coupled by an intermediary stage 203 providing high frequency isolation therebetween and a resonant tank 204. The resonant tank 204, when excited by a square waveform generated by the first stage 201, generates a resonant sinusoidal current which gets scaled by the intermediary stage 203 and rectified by the second stage 202. The second stage 202 also filters the rectified ac current and outputs a DC voltage Vo.

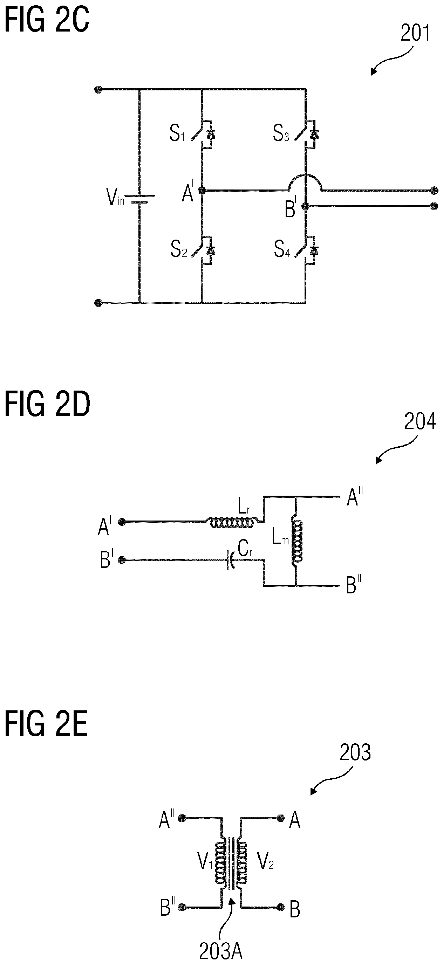

FIG 2C illustrates an electrical circuit diagram of a first stage 201 of the isolated DC-DC converter 102C shown in FIG 2B, according to an embodiment of the present disclosure. The first stage forms a primary full bridge rectifier and includes four power conversion switches S1-S4 electrically coupled to the resonant tank 204 such that a second terminal of a first power conversion switch S1 is connected to a first terminal of a second power conversion switch S2 and a first end A' of a resonant inductor Lr of the resonant tank 204. A first terminal of the first power conversion switch S1 is connected to a first terminal of a third power conversion switch S3. A second terminal of the second power conversion switch S2 is connected to a second terminal of a fourth power conversion switch S4. A second terminal of the third power conversion switch S3 is connected to a first terminal of the fourth power conversion switch S4 and a first end B' of a resonant capacitor Cr of the resonant tank 204.

As shown in FIG 2C, each of the power conversion switches S1-S4 when in an off state, blocks a positive DC voltage applied across the first terminal and the second terminal of each of the power conversion switches S1-S4. This is achieved via a diode connected in parallel to each power conversion switch S1-S4.

FIG 2D illustrates an electrical circuit diagram of a resonant tank 204 of the isolated DC-DC converter 102C shown in FIG 2B, according to an embodiment of the present disclosure. The resonant tank includes a resonant inductor Lr, a resonant capacitor Cr, and a transformer magnetizing inductor Lm operably connected to one another.

A second end of the resonant inductor Lr is connected to a first end of the transformer magnetizing inductor Lm. As disclosed in the detailed description of FIG 2C, a first end A' of the resonant inductor Lr is connected to a second terminal of a first power conversion switch S1 and a first terminal of a second power conversion switch S2 of the first stage 201.

A second end of the resonant capacitor Cr is connected to a second end of the transformer magnetizing inductor Lm. Also, as disclosed in the detailed description of FIG 2C, a first end B' of the resonant capacitor Cr is connected to a second terminal of a third power conversion switch S3 and a first terminal of a fourth power conversion switch S4 of the first stage 201. The transformer magnetizing inductor Lm is connected across the intermediary stage 203.

FIG 2E illustrates an electrical circuit diagram of an intermediary stage 203 of the isolated DC-DC converter 102C shown in FIG 2B, according to an embodiment of the present disclosure. The intermediary stage 203 includes a high frequency transformer 203A connected between the the resonant tank 204 connected to the first stage 201, and the second stage 202. The high frequncy transformer 203A has a primary winding A"-B" and a secondary winding A-B having a turns ratio of V1:V2 therebwtween. The first end of the transformer magnetizing inductor Lm of the resonant tank 204 is connected to a first end A" of the primary winding of the high frequency transformer 203A of the intermediary stage 203 and a second end of the transformer magnetizing inductor Lm is connected to a second end B" of the primary winding of the high frequency transformer 203A.

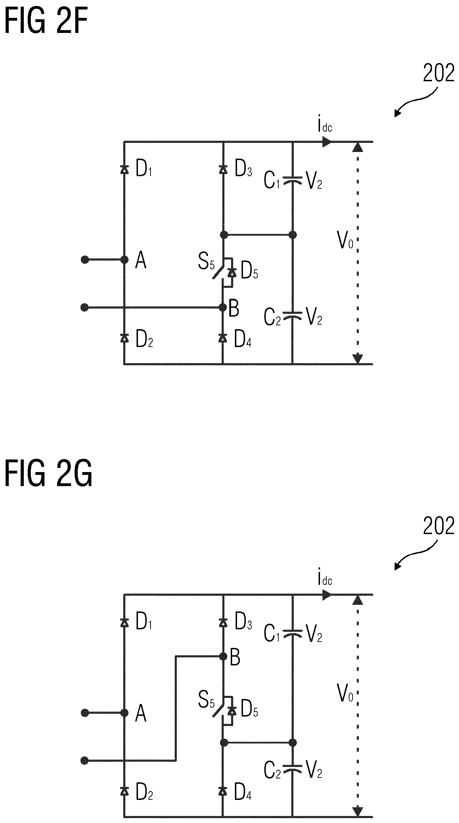

FIGS 2F-2G illustrate an electrical circuit diagram of a second stage 202 of the isolated DC-DC converter 102C shown in FIG 2B, according to various embodiments of the present disclosure. The second stage 202 includes a power conversion switch S5, four diodes D1-D4, and the two or more capacitors C1, C2 are arranged across a secondary winding A-B of the high frequency transformer 203A of the intermediary stage.

According to an embodiment shown in FIG 2F, a first terminal of a first diode D1 is connected to a second terminal of a second diode D2 and a first end A of the secondary winding. A first terminal of the second diode D2 is connected to a first terminal of a fourth diode D4 and a negative terminal of a second capacitor C2. A second terminal of the fourth diode D4 is connected to a second terminal of the power conversion switch S5 and a second end B of the secondary winding. A first terminal of the power conversion switch S5 is connected to a first terminal of a third diode D3, a positive terminal of the second capacitor C2 and a negative terminal of a first capacitor C1. A second terminal of the first diode D1 is connected to a second terminal of the third diode D3 and to a positive terminal of the first capacitor C1.

According to another embodiment shown in FIG 2G, a first terminal of a first diode D1 is connected to a second terminal of a second diode D2 and a first end A of the secondary winding. A first terminal of the second diode D2 is connected to a first terminal of a fourth diode D4 and a negative terminal of a second capacitor C2. A second terminal of the fourth diode D4 is connected to a second terminal of the power conversion switch S5, a positive terminal of the second capacitor C2 and a negative terminal of a first capacitor C1. A first terminal of the power conversion switch S5 is connected to a first terminal of a third diode D3 and a second end B of the secondary winding. A second terminal of the first diode D1 is connected to a second terminal of the third diode D3 and to a positive terminal of the first capacitor C1.

As shown in both the FIGS 2F and 2G, the power conversion switch S5 when in an off state, blocks a positive DC voltage applied across its first terminal and second terminal. This is achieved by connecting a diode D5 across the power conversion switch S5.

The operation, that is, switching on and off, of the power conversion switch S5 determines whether the DC voltage Vo, appearing across the second stage 202, that is, capacitors C1 and C2, is V2 or 2V2.

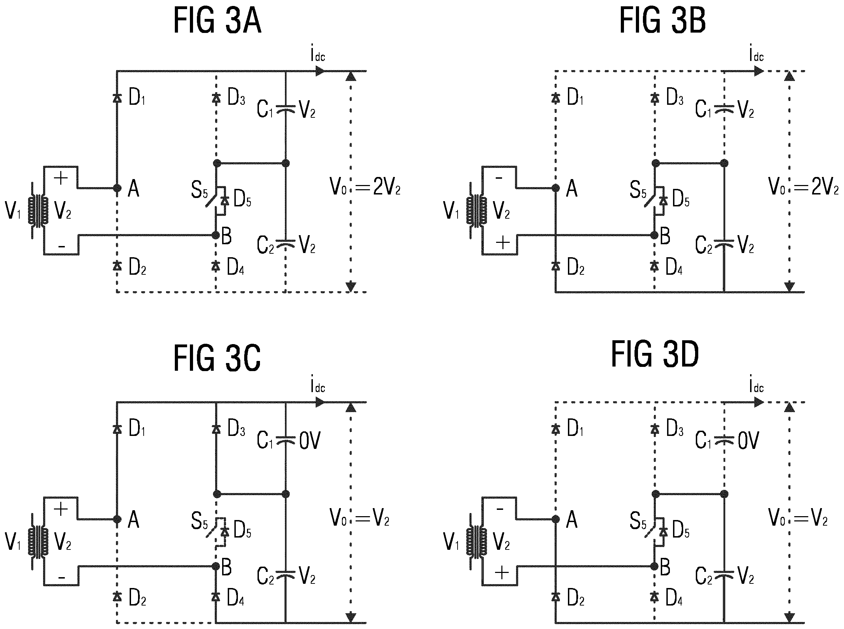

FIGS 3A-3B illustrate current flows through the electrical circuit diagram of the second stage 202 of the isolated DC-DC converter 102C, shown in FIG 2F, when a power conversion switch S5 of the second stage 202 is closed, according to an embodiment of the present disclosure.

The voltage appearing at the secondary winding A-B of the high frequency transformer 203A is an alternating voltage $V_{AB}$. As shown in FIG 3A, when $V_{AB}$ is positive, the first diode D1 is forward biased, thereby charging the first capacitor C1 to voltage V2 via the closed power conversion switch S5.

As shown in FIG 3B, when $V_{AB}$ is negative, the second diode D2 and the diode D5 connected across the power conversion switch S5 are forward biased, thus charging the second capacitor C2 to voltage V2 via the closed power conversion switch S5.

As the high frequency voltage $V_{AB}$ at the secondary winding A-B is positive and negative for equal periods, both the capacitors C1 and C2 are charged equally to the voltage V2, wherein V2 is the amplitude of the high frequency voltage V2ac or $V_{AB}$. The output voltage Vo is the sum of the voltages across the capacitors C1 and C2 which is 2V2. Thus, the output of the second stage 202 and therefore the power converter 102 is 2V2.

Also, as disclosed above, the gain of the second stage 202 now becomes 2. Therefore, when the power conversion S5 is closed, and the gain is 2, overall gain 'G' of the power converter 102 can be represented as:

$$G = 2 * K * \left(\frac{Ns}{Np}\right)$$

Wherein K is gain of the resonant tank 204 and
Ns/Np is the transformer turns ratio.

Thus, the overall gain of the power converter now becomes twice that of the power converter according to state of the art disclosed in the detailed description of FIG 1B.

FIGS 3C-3D illustrate current flows through the electrical circuit diagram of the second stage 202 of the isolated DC-DC converter 102C, shown in FIG 2F, when a power conversion switch S5 of the second stage 202 is open, according to an embodiment of the present disclosure.

As shown in FIG 3D, when $V_{AB}$ is negative, the second diode D2 and the diode D5 connected across the power conversion switch S5 are forward biased, thus the second capacitor C2 is charged to a voltage V2 via the diodes D2 and D4. However, as shown in FIG 3C, when $V_{AB}$ is positive, the first diode D1 and the fourth diode D4 are forward biased. Thus, both the capacitors C1 and C2 are charged via the diodes D1 and D4.

As the high frequency voltage V2ac or $V_{AB}$ at the secondary A-B is positive and negative for equal periods, the capacitor C2 is charged for both negative as well as the positive half cycle of the voltage $V_{AB}$. Whereas the capacitor C1 is charged only in the positive half cycle. This asymmetry leads to the charge imbalance across the capacitors C1 and C2.

As both the capacitors C1 and C2 discharge into the load, this imbalance causes the voltage across the first capacitor C1 to drop till the moment when the voltage across the first capacitor C1 turns negative. As this voltage across the first capacitor C1 turns just about negative, the third diode D3 gets forward biased. Thus, the voltage across the first capacitor C1 is forward voltage of the diode D3. This is negligible as compared to the output voltage Vo and therefore considered to be zero. Thus, the voltage across the first capacitor C1 is zero and across the second capacitor C2 is V2.

As the output voltage Vo is the sum of the voltages across C1 and C2 which is V2, thus making the gain of the second stage 202 now 1. When the power conversion switch S5 is open, the gain thus becomes 1.

Hence, it is evident that by changing the state of the power conversion switch S5 we can either have output voltage Vo equal to V2 for lower voltage requirements or 2V2 for higher voltage requirements.

Moreover, the power conversion switch S5 need not be a high frequency electronic switch. It can either be a mechanical switch like a relay or a contactor or a thyristor, MOSFET, IGBT or any other device of these class. Whichever solution is a cheaper can be considered while selecting the power conversion switch S5. Moreover, the amplitude of the voltage V2 can be regulated by adjusting gain of the resonant tank 204 via switching frequency modulation. Thus, depending on the type of the EV 106 connected to the charging device 200, the state of the power conversion switch S5 is varied selectively to achieve almost double the output voltage Vo as compared to the power converter of state of the art, thereby ensuring wide output voltage range capability.

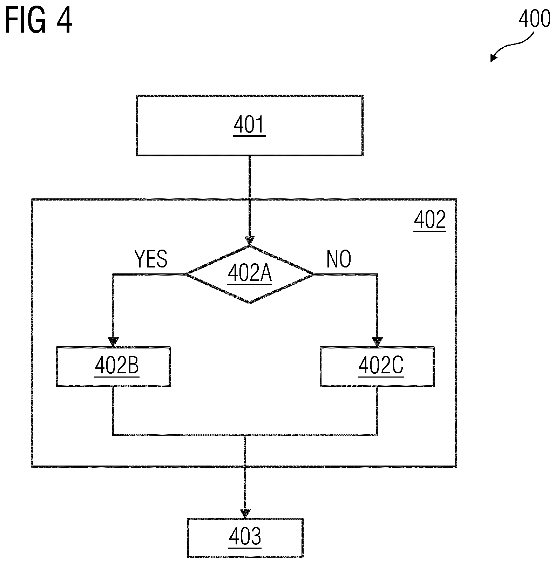

FIG 4 illustrates a process flow chart 400 of a method for transferring power to an electric vehicle (EV) 106 from a power grid employing the charging device 200 shown in FIG 2A, according to an embodiment of the present disclosure.

At step 401, the method detects physical connection of the EV 106 to the vehicle-side module 103 of the charging device 200.

At step 402, the method selectively operates, based on a voltage requirement of a battery of the EV 106, the power conversion switch S5 of the second stage 202 of the isolated DC-DC converter 102C of the power converter 102 of the charging device 200 in one of a closed state and an open state. The power conversion switch S5 when in the closed state enables the second stage 202 to generate the DC voltage Vo having an amplitude 2V2 corresponding to a high frequency AC voltage V2ac of the amplitude V2, and when in an open state enables the second stage 202 to generate the DC voltage Vo having an amplitude V2 corresponding to the high frequency AC voltage V2ac having the amplitude V2.

The method switches the power conversion switch S5, for example, by employing a control unit 104 of the charging device 200, between the states closed and open, depending upon the type of the EV 106 to which the DC voltage Vo is to be applied and voltage requirements of the battery of this EV 106.

At step 402A, the method employs the charging device 200 to detect the voltage requirement of the EV 106 using the control unit 104 shown in FIG 2A, which in turn is electrically coupled with the power converter 102. Alternatively, the method detects the voltage requirement of the EV 106 by the software module 105, which in turn is electrically coupled with the control unit 104. The software module 105, for example, via its user interface 105A receives the voltage requirement as a user input. Alternatively, the method employs one or more image capturing devices (not shown) in communication with the software module 105 to record one or more images of the EV 106 which are in turn processed by the software module 105 to determine a make and a type of the EV 106 based on which the voltage requirement is determined.

At step 402B, the method switches the power conversion switch S5 on by closing it, when the EV 106 is a heavy-duty vehicle such as a bus or a truck, to generate Vo=2V2.

At step 402C, the method switches the power conversion switch S5 OFF by opening it, when the EV 106 is not a heavy-duty vehicle such as a light motor vehicle, etc., to generate Vo=V2.

At step 403, the method further includes providing the DC voltage Vo to the EV 106 via the vehicle-side module 103 of the charging device 200 for charging the EV 106.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

List of reference numerals:

100 DC charger according to state of the art
101 input module
101A power grid
101B input side protection unit
102 power converter
102A input filter
102B 3-phase AC-DC converter
102C isolated DC-DC converter
103 output module
104 controller module/control unit
104A, 104B controllers
105 software module
105A user interface
105B communication controller module
105C portable electronic devices
105D communication network
105E power grid
106 electric vehicle (EV)
200 charging device
201 first stage of the isolated DC-DC converter
202 second stage of the isolated DC-DC converter
203 intermediary stage of the isolated DC-DC converter
204 resonant tank of the isolated DC-DC converter
S1-S5 power conversion switches
D1-D5 diodes of the second stage

**Claims**

1. A power converter (102), comprising:

   ∘ an isolated DC-DC converter (102C) comprising:

      ▪ a first stage (201) capable of converting a DC voltage (Vin) into a high frequency AC voltage (V1ac) having an amplitude V1;
      ▪ an intermediary stage (203) having a high frequency transformer (203A), wherein a turns ratio of the high frequency transformer (203A) equals a ratio of the high frequency AC voltage (V1ac) and a high frequency AC voltage (V2ac);
      ▪ a resonant tank (204) operably connected to the first stage (201) and a primary winding of the high frequency transformer (203A) of the intermediary stage (203), wherein the resonant tank (204) when excited by a square waveform generated by the first stage (201) outputs a resonant sinusoidal current that is scaled by the high frequency transformer (203A); and

   **characterized by**:

      ▪ a second stage (202), electrically coupled to a secondary winding of the high frequency transformer (203A) of the intermediary stage (203), comprising a power conversion switch (S5), four diodes (D1-D4), and two or more capacitors (C1, C2), electrically coupled to one another, wherein the second stage (202) selectively converts the high frequency AC voltage (V2ac) of amplitude V2 into a DC voltage (Vo) of amplitude equaling one of V2 and 2V2.

2. The power converter (102) according to claim 1, wherein the first stage (201) comprises four power conversion switches (S1-S4) electrically coupled to the resonant tank (204) such that:

   - a second terminal of a first power conversion switch (S1) is connected to a first terminal of a second power conversion switch (S2) and a first end (A') of a resonant inductor (Lr) of the resonant tank (204);
   - a first terminal of the first power conversion switch (S1) is connected to a first terminal of a third power conversion switch (S3), and a second terminal of the second power conversion switch (S2) is connected to a second terminal of a fourth power conversion switch (S4); and
   - a second terminal of the third power conversion switch (S3) is connected to a first terminal of the fourth power conversion switch (S4), and a first end (B') of a resonant capacitor (Cr) of the resonant tank (204).

3. The power converter (102) according to any one of the claims 1 and 2, wherein the resonant tank (204) comprises a resonant inductor (Lr), a resonant capacitor (Cr), and a transformer magnetizing inductor (Lm) operably connected to one another such that:

   - a second end of the resonant inductor (Lr) is connected to a first end of the transformer magnetizing inductor (Lm), wherein a first end (A') of the resonant inductor (Lr) is connected to a second terminal of a first power conversion switch (S1) and a first terminal of a second power conversion switch (S2) of the first stage (201);
   - a second end of the resonant capacitor (Cr) is connected to a second end of the transformer magnetizing inductor (Lm), wherein a first end (B') of the resonant capacitor (Cr) is connected to a second terminal of a third power conversion switch (S3) and a first terminal of a fourth power conversion switch (S4) of the first stage (201); and
   - the first end of the transformer magnetizing inductor (Lm) is connected to a first end (A") of the primary winding of the high frequency transformer (203A) of the intermediary stage (203) and a second end of the transformer magnetizing inductor (Lm) is connected to a second end (B") of the primary winding of the high frequency transformer (203A).

4. The power converter (102) according to claim 1, wherein in the second stage (202), the power conversion switch (S5), the four diodes (D1-D4), and the two or more capacitors (C1, C2) are arranged across a secondary winding of the high frequency transformer (203A) such that:

   - a first terminal of a first diode (D1) is connected to a second terminal of a second diode (D2) and a first end (A) of the secondary winding;
   - a first terminal of the second diode (D2) is connected to a first terminal of a fourth diode (D4) and a negative terminal of a second capacitor (C2);
   - a second terminal of the fourth diode (D4) is connected to a second terminal of the power conversion switch (S5) and a second end (B) of the secondary winding;
   - a first terminal of the power conversion switch (S5) is connected to a first terminal of a third diode (D3), a positive terminal of the second capacitor (C2) and a negative terminal of a first capacitor (C1); and
   - a second terminal of the first diode (D1) is connected to a second terminal of the third diode (D3) and to a positive terminal of the first capacitor (C1).

5. The power converter (102) according to claim 1, wherein in the second stage (202), the power conversion switch (S5), the four diodes (D1-D4), and the two or more capacitors (C1, C2) are arranged across a secondary winding of the high frequency transformer (203A) such that:

   - a first terminal of a first diode (D1) is connected to a second terminal of a second diode (D2) and a first end (A) of the secondary winding;
   - a first terminal of the second diode (D2) is connected to a first terminal of a fourth diode (D4) and a negative terminal of a second capacitor (C2);
   - a second terminal of the fourth diode (D4) is connected to a second terminal of the power conversion switch (S5), a positive terminal of the second capacitor (C2) and a negative terminal of a first capacitor (C1);
   - a first terminal of the power conversion switch (S5) is connected to a first terminal of a third diode (D3) and a second end (B) of the secondary winding; and
   - a second terminal of the first diode (D1) is connected to a second terminal of the third diode (D3) and to a positive terminal of the first capacitor (C1).

6. The power converter (102) according to any one of claims 1, 2, 4 and 5, wherein each of the power conversion switches (S1-S5), when in an off state, blocks a positive DC voltage (Vo) applied across the first terminal and the second terminal of each of the power conversion switches (S1-S5).

7. The power converter (102) according to claim 1, wherein:

- the power conversion switch (S5) when in a closed state enables the second stage (202) to generate the DC voltage (Vo) having the amplitude 2V2 corresponding to the high frequency AC voltage (V2ac) of the amplitude V2; and
- the power conversion switch (S5) when in an open state enables the second stage (202) to generate the DC voltage (Vo) having the amplitude V2 corresponding to the high frequency AC voltage (V2ac) having the amplitude V2.

8. A control unit (104) controlling the power converter (102) according to claims 1-7, wherein the control unit (104) comprises one or more controllers (104A-104B) configured to selectively switch a power conversion switch (S5), of a second stage (202) of an isolated DC-DC converter (102C) of the power converter (102), between a closed state and an open state based on a voltage requirement of a battery of an electric vehicle (106) when connected to a vehicle-side module (103) connectable to the power converter (102).

9. A charging device (200) for transferring power to an electric vehicle (106) from a power grid, wherein the charging device (100) comprises:

- the control unit (104) according to claim 8;
- the power converter (102) according to claims 1-7, being controlled by the control unit (104);
- a grid-side module (101) capable of receiving one of an AC voltage (Vacgrid) and a DC voltage (Vdcgrid) from the power grid
- a vehicle-side module (103) capable of delivering the DC voltage (Vo) to the electric vehicle (106),
- and wherein the vehicle-side module (103) is electrically coupled to the grid-side module (101) via the power converter (102).

10. A method (400) for transferring power to an electric vehicle (106) from a power grid using the charging device (200) according to claim 9, comprising:

- detecting (401) physical connection of the electric vehicle (106) to the vehicle-side module (103) of the charging device (200); and
- selectively operating (402), based on a voltage requirement of a battery of the electric vehicle (106), a power conversion switch (S5) of the second stage (202) of the isolated DC-DC converter (102C) of the power converter (102) of the charging device (200) in one of a closed state and an open state.

11. The method (400) according to claim 9, wherein the power conversion switch (S5) when in the closed state enables the second stage (202) to generate the DC voltage (Vo) having an amplitude 2V2 corresponding to a high frequency AC voltage (V2ac) of the amplitude V2, and when in an open state enables the second stage (202) to generate the DC voltage (Vo) having an amplitude V2 corresponding to the high frequency AC voltage (V2ac) having the amplitude V2.

# FIG 1A

100

106

101A 101B 102A 102B 102C 103

101

102

104A 104B

104

105A 105B

105

105C 105D 105E

(PRIOR ART)

EP 4 333 279 A1

# FIG 1B

(PRIOR ART)

EP 4 333 279 A1

# FIG 1C

(PRIOR ART)

FIG 2A

# FIG 2B

## FIG 2C

## FIG 2D

## FIG 2E

**FIG 2F**

**FIG 2G**

FIG 3A

FIG 3B

FIG 3C

FIG 3D

FIG 4

400

401

402

YES 402A NO

402B 402C

403

# EP 4 333 279 A1

**EUROPEAN SEARCH REPORT**

Europäisches Patentamt
European Patent Office
Office européen des brevets

Application Number

EP 22 19 3234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG HAOYU ET AL: "A PWM LLC Type Resonant Converter Adapted to Wide Output Range in PEV Charging Applications", IEEE TRANSACTIONS ON POWER ELECTRONICS, INSTITUTE OF ELECTRICAL AND ELECTRONICS ENGINEERS, USA, vol. 33, no. 5, 1 May 2018 (2018-05-01), pages 3791-3801, XP011676864, ISSN: 0885-8993, DOI: 10.1109/TPEL.2017.2713815 [retrieved on 2018-02-05] * figure 1 * * figure 3 * * figure 13 * * abstract * * page 3795 * ----- | 1-11 | INV. H02M1/00 H02M7/5387 H02M3/00 H02M3/335 |
| Y | US 2018/234028 A1 (CHEN YANG [CA] ET AL) 16 August 2018 (2018-08-16) * figures 3A-3B * * figures 5A-5B * * figures 7A-7D * * paragraph [0101] - paragraph [0103] * * paragraph [0108] - paragraph [0115] * ----- | 1-11 | |
| A | WO 2022/157350 A1 (SIEMENS AG [DE]) 28 July 2022 (2022-07-28) * page 14, line 1 - page 15, line 7; figures 2B-2C * ----- | 1-11 | TECHNICAL FIELDS SEARCHED (IPC) H02M |
| A | CN 113 114 041 A (UNIV SHANGHAI TECH) 13 July 2021 (2021-07-13) * figure 1 * ----- | 1-11 | |

The present search report has been drawn up for all claims

| Place of search | Date of completion of the search | Examiner |
|---|---|---|
| The Hague | 6 February 2023 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

## ANNEX TO THE EUROPEAN SEARCH REPORT
## ON EUROPEAN PATENT APPLICATION NO.

EP 22 19 3234

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2023

| Patent document cited in search report | | Publication date | Patent family member(s) | | Publication date |
|---|---|---|---|---|---|
| US 2018234028 | A1 | 16-08-2018 | CA 2995035 A1<br>US 2018234028 A1<br>US 2018241318 A1 | | 14-08-2018<br>16-08-2018<br>23-08-2018 |
| WO 2022157350 | A1 | 28-07-2022 | NONE | | |
| CN 113114041 | A | 13-07-2021 | NONE | | |

EPO FORM P0459

For more details about this annex : see Official Journal of the European Patent Office, No. 12/82